# EUROPÄISCHE PATENTSCHRIFT

(11) **EP 1 447 287 B1**
(45) Veröffentlichungstag und Bekanntmachung des Hinweises auf die Patenterteilung: **23.05.2007**
(21) Anmeldenummer: 03026977.3
(22) Anmeldetag: 26.11.2003
(51) Int. Cl.: B60S 1/08

(54) **Wischeranlage für Fahrzeug-Windschutzscheiben**
Wiper system for vehicle windscreens
Systeme d'essuie-glace pour pare-brise de vehicules

(30) Priorität: 17.02.2003 DE 10306496
(43) Veröffentlichungstag der Anmeldung: 18.08.2004
(73) Patentinhaber: ROBERT BOSCH GMBH, 70442 Stuttgart (DE)
(72) Erfinder: Brunner, Rene, 76448 Durmersheim (DE); Guettinger, Joachim, 77855 Achern (DE); Grass, Ansgar, 77746 Schutterwald-Langhurst (DE); Wegner, Norbert, 77815 Buehl (DE); Habay, Isabelle, 67000 Strasbourg (FR); De Dias, Orlando Gabriel, 76131 Karlsruhe (DE); Rummel, Michael, 77855 Achern-Oensbach (DE); Delelee-Prehaut, Guillaume, 71634 Ludwigsburg (DE)

(56) Entgegenhaltungen:
- EP-A- 0 405 745
- DE-A1- 10 113 678
- US-A- 5 177 418

## Beschreibung

Die Erfindung betrifft eine Wischeranlage für Fahrzeug-Windschutzscheiben mit mindestens zwei Scheibenwischern nach der Gattung des Hauptanspruchs.

### Stand der Technik

Zum Reinigen der Windschutzscheiben an Kraftfahrzeugen sind verschiedene Wischanlagen bekannt. Bei den Wischfeldern unterscheidet man hauptsächlich Einhebelwischfelder und Zweihebelwischfelder. Bei den Zweihebelwischfeldern können die Wischhebel der Scheibenwischer im Gleichlauf oder im Gegenlauf angetrieben werden. Als Antrieb dient dabei entweder nur ein Wischermotor für eine Drehrichtung, die über ein Kurbelgetriebe mit einem Wischergestänge in eine oszillierende Schwenkbewegung der Scheibenwischer umgesetzt wird, oder je ein Wischermotor mit reversierendem Antrieb für jeden Scheibenwischer. Aus der EP 01 84 312 A2 ist eine derartige Wischeranlage bekannt, bei der die beiden Wischermotoren über ein Steuergerät aktiviert werden. Dabei wird die Position der Scheibenwischer jeweils mittels Positionssensoren über je eine Steuerleitung an das Steuergerät übermittelt und die Wischermotore werden abhängig von den Positionssignalen vom Steuergerät derart angesteuert, dass bei sich überlappenden Wischfeldern keine Kollision der Scheibenwischer stattfindet.

Aus der DE 101 13 678 A1 ist ferner eine Wischeranlage für Kraftfahrzeuge bekannt, bei der zwei Wischermodule, bestehend aus Wischermotor, Getriebe und elektronischer Steuerung, miteinander korrespondieren und wobei das fahrerseitige Wischermodul einen Reversiermotor und das beifahrerseitige Wischermodul einen Rundläufermotor aufweist. Das Wischermodul auf der Fahrerseite ist über eine Steuerleitung mit der Zentralelektronik des Kraftfahrzeugs verbunden und lässt sich von einem daran angeschlossenen Wischerschalter in Betrieb nehmen.

Bei den bekannten Wischeranlagen, deren Wischermodule über Steuerleitungen miteinander oder mit einem Fahrzeug-Steuergerät kommunizieren, müssen im Falle einer Störung oder Unterbrechung der Steuerleitungen Sicherheitsvorkehrungen getroffen werden, um eine Kollision der Scheibenwischer zu verhindern. So wird bei der bekannten Wischeranlage (VW Phaeton, Baujahr 2002) bei einer Unterbrechung der seriellen Schnittstelle zwischen den beiden Wischermodulen das Slavemodul auf der Beifahrerseite in der erweiterten Parkstellung des Scheibenwischers abgeschaltet.

Mit der vorliegenden Lösung wird angestrebt, den Scheibenwischer auf der Beifahrerseite beim Auftreten einer Störung auf der seriellen Schnittstelle zwischen den Wischermodulen mit einer Notfunktion weiter betreiben zu können.

### Vorteile der Erfindung

Die erfindungsgemäße Wischeranlage mit den kennzeichnenden Merkmalen des Anspruchs 1 hat den Vorteil, dass das Slavemodul auch über den eine Bordnetz-Schnittstelle bildenden Steuerbus vom Fahrzeug-Steuergerät ansprechbar ist und nicht mehr ausschließlich über die serielle Schnittstelle vom Mastermodul gesteuert wird. Dabei ist die Bordnetz-Schnitts'telle in bekannter Weise als kostengünstige Eindraht-Schnittstelle auszubilden, beispielsweise als LIN-BUS (Lokal Interconnect Network). Dabei kann ferner für die Wischeranlage ein universeller Kabelbaum für Linkslenkerund Rechtslenker-Fahrzeuge verwendet werden. Ein weiterer Vorteil besteht darin, dass das Mastermodul ohne jede Einschränkung der Funktionen der Wischeranlage die Kommunikation mit dem Slavemodul auf der seriellen Schnittstelle mittels einer Timeout-Überwachung jederzeit überprüfen kann, um dort eine auftretende Störung möglichst rasch zu erfassen und an das Fahrzeug-Steuergerät zu melden. Da bei einem LIN-BUS das Fahrzeug-Steuergerät als übergeordnetes Single-Master und die Wischermodule als Multiple-Slaves fungieren, lässt sich auch auf der Beifahrerseite mit dem intakten Slavemodul über die Bordnetz-Schnittstelle die Wischfunktion im Notbetrieb aufrecht erhalten, wenn die serielle Schnittstelle zwischen den Wischermodulen gestört beziehungsweise unterbrochen ist.

Durch die in den Unteransprüchen aufgeführten Maßnahmen ergeben sich vorteilhafte Weiterbildungen und Verbesserungen der im Hauptanspruch angegebenen Merkmale. Dabei sind in zweckmäßiger Weise alle Wischermodule mit einer umkonfigurierbaren, vorzugsweise einheitlichen elektronischen Steuerung versehen und über die Bordnetz-Schnittstelle an das Fahrzeug-Steuergerät angeschlossen. Dies hat den Vorteil, dass die Wischermodule mit gleichen Steuergeräten in Fahrzeuge eingebaut und dann über das Fahrzeug-Steuergerät entsprechend der jeweiligen Fahrzeugausführung als Master- oder Slave-Steuerung konfiguriert beziehungsweise umkonfiguriert werden können. Außerdem lassen sich damit in vorteilhafter Weise beim Ansprechen der Timeout-Überwachung die Steuerungen des Master- und des Slavemoduls vom Fahrzeug-Steuergerät her unterschiedlich umkonfigurieren. Um bei einer Störung auf der seriellen Schnittstelle zwischen den Wischermodulen die Wischfunktion des Slavemoduls auf der Beifahrerseite möglichst vollständig aufrecht erhalten zu können, wird in Weiterbildung der Erfindung vorgeschlagen, dass das Fahrzeug-Steuergerät die Steuerung des Mastermodules veranlasst, die Sollwerte für das Slavemodul auf die Bordnetz-Schnittstelle zu legen. Ferner wird die Steuerung des Slavemoduls vom Fahrzeug-Steuergerät veranlasst, die vom Mastermodul über die Bordnetz-Schnittstelle kommenden Sollwerte einzulesen. In einem weiteren Schritt kann über die Bordnetz-Schnittstelle auch die Kommunikation zwischen Master- und Slavemodul wieder hergestellt werden. Dazu werden in Weiterbildung der Erfindung die Steuerungen der Wischermodule vom Fahrzeug-Steuergerät veranlasst, die Istwerte des Slavemoduls auf die Bordnetz-Schnittstelle zu legen und diese von der Steuerung des Mastermodules über die Bordnetz-Schnittstelle einzulesen. Bei einer reduzierten Bautrate, von z. B. 20 kBaut, erfolgt der Austausch der Soll- und Istwerte über die Bordnetz-Schnittstelle lediglich mit einer geringeren Aktualisierungsrate.

Um einen Ausfall der Kommunikation auf der seriellen Schnittstelle zwischen den Wischermodulen möglichst unverzüglich erfassen zu können, wird in zweckmäßiger Weise in der Steuerung des Mastermoduls die Timeout-Überwachung mit dem Einschalten der Bordnetz-Stromversorgung aktiviert, so dass sie zum Datenaustausch auf der seriellen Schnittstelle parallel läuft. Die Überwachung der seriellen Schnittstelle wird bei abgeschalteter Wischeranlage dadurch erreicht, dass dann die Parklage, beziehungsweise die erweitere Parklage als Sollwert-Signal zyklisch auf die serielle Schnittstelle gegeben und als Istwert vom Slavemodul bestätigt wird. Zweckmäßigerweise startet dabei die Steuerung des Mastermodules mit jedem der zyklisch auf die serielle Schnittstelle abgegebenen Sollwert-Signale die Timeout-Überwachung neu. Ferner wird zur Erzielung einer möglichst unverzüglichen Störungsmeldung die Ablaufzeit der Timeout-Überwachung so gewählt, dass die Steuerung des Slavemoduls mit jedem Eingang eines Sollwert-Signales innerhalb dieser Ablaufzeit ein Istwert-Signal über die serielle Schnittstelle zurückmeldet, mit dem die Timeout-Überwachung zurückgesetzt wird. Schließlich kann in zweckmäßiger Weise beim Ansprechen der Timeout-Überwachung die Fehlermeldung an das Fahrzeug-Steuergerät auch dafür verwendet werden, den Fehler über eine Anzeige sichtbar zu machen, um das Aufsuchen einer Fachwerkstatt anzumahnen.

### Zeichnung

Die Erfindung wird im Folgenden anhand der Figuren beispielhaft näher erläutert. Es zeigen:
Figur 1 die schematische Darstellung einer erfindungsgemäßen Wischeranlage für Fahrzeug-Windschutzscheiben,
Figur 2 zeigt ein Diagramm mit den verschiedenen Signalverläufen zur Überwachung der Kommunikation zwischen den Wischermodulen,
Figur 3 zeigt ein Flussdiagramm für das Notlaufkonzept der Wischeranlage bei Ausfall dieser Kommunikation.

### Beschreibung des Ausführungsbeispiels

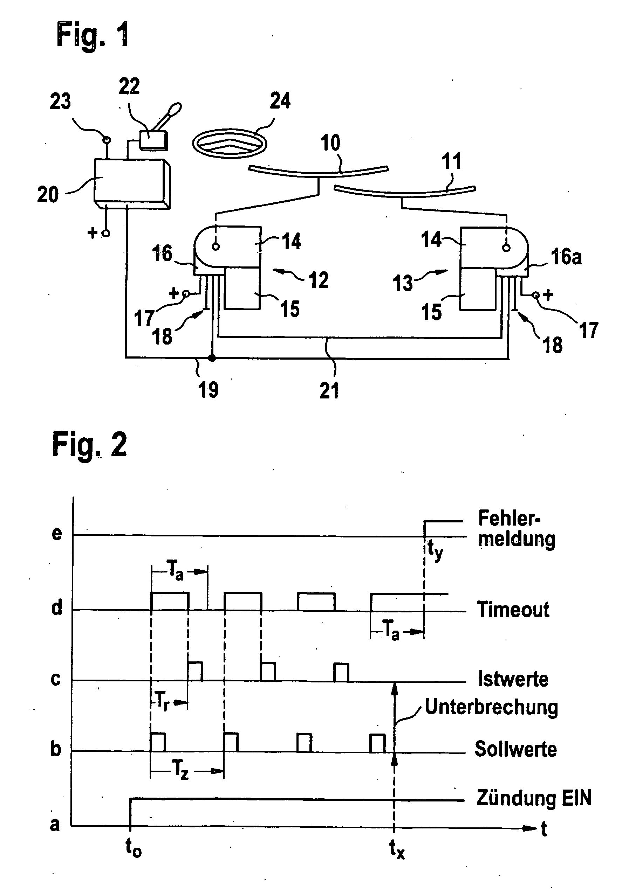

Figur 1 zeigt in schematischer Darstellung eine Wischeranlage für die Windschutzscheibe von Kraftfahrzeugen. Die Wischeranlage ist mit je einem Scheibenwischer 10 auf der Fahrerseite und 11 auf der Beifahrerseite versehen. Die Scheibenwischer werden von je einem Wischermddul 12 und 13 angetrieben. Die Wischermodule 12, 13 bestehen jeweils aus einem Reversiermotor 14, einem Getriebe 15 und einer elektronischen Steuerung 16. Die Wischermodule 12, 13 sind über ihre elektrische Steuerung 16 mit einer Plusklemme 17 sowie einem Masseanschluss 18 in nicht dargestellter Weise an die Stromversorgung des Fahrzeug-Bordnetzes angeschlossen. Die Steuerungen 16 beider Wischermodule 12, 13 sind über eine Bordnetz-Schnittstelle 19 gemeinsam an ein Fahrzeug-Steuergerät 20 angeschlossen. Die Bordnetz-Schnittstelle 19 ist eine Eindraht-Steuerleitung, über die in an sich bekannter Weise mit einem standardisierten Protokollformat eines Lokal Interconnet Network (LIN) Daten zyklisch zu übertragen sind. Als Hardware kann z.b. ein an sich bekannter Schnittstellen-Standart der Internationalen Standard Organisation (ISO) verwendet werden. Die Steuerungen 19 beider Wischermodule 12, 13 sind ferner über eine serielle Schnittstelle 21 direkt miteinander verbunden. Über diese serielle Schnittstelle 21 werden ebenfalls in an sich bekannter Weise z.b. nach einem LIN-BUS-Protokollformat Daten zyklisch ausgetauscht, welche die Positionen der .Scheibenwischer 10 und 11 in Form von Soll- und Istwerten darstellen. Die Wischeranlage wird über einen am Fahrzeug-Steuergerät 20 angeschlossen Wischerschalter 22 betrieben. Über einen Diagnoseanschluss 23 des Fahrzeug-Steuergerätes 20 lässt sich die Wischeranlage überprüfen und gegebenenfalls umkonfigurieren.

Aufgrund der Überlagerung der Scheibenwischer 10 und 11 in ihrer Ruhelage müssen die Wischermodule 12, 13 im Betrieb so angesteuert werden, dass die Scheibenwischer 10, 11 nicht miteinander kollidieren. Bei einem Linkslenker-Fahrzeug, was in Figur 1 durch das Lenkrad-Symbol 24 angedeutet ist, wird zu diesem Zweck das fahrerseitige linke Wischermodul 12 als Mastermodul mit einer Master-Steuerung 16 versehen und das beifahrerseitige rechte Wischermodul 13 wird als Slavemodul mit einer Slave-Steuerung 16a ausgestattet. Dabei sind die Wischkennlinien beider Scheibenwischer 10, 11 in der Steuerung 16 des Mastermoduls 12 abgelegt. Mit dem Einschalten der Wischeranlage durch den Wischerschalter 22 wird sodann das Mastermodul den Scheibenwischer 10 entsprechend seiner in der Steuerung 16 abgelegten Kennlinie ansteuern. Ferner wird das Slavemodul 13 über die serielle Schnittstelle 21 von der Steuerung 16 des Mastermoduls 12 angesteuert. Dabei sendet das Mastermodul 12 in zyklischer Folge Positions-Sollwerte an das Slavemodul 13 und das Slavemodul 13 antwortet über die serielle Schnittstelle jeweils mit seinen Positions-Istwerten. Eine Kommunikation über die Bordnetz-Schnittstelle erfolgt im Wischbetrieb ausschließlich zwischen dem Fahrzeug-Steuergerät 20 und dem Mastermodul 12. Das Slavemodul 13 hört lediglich mit.

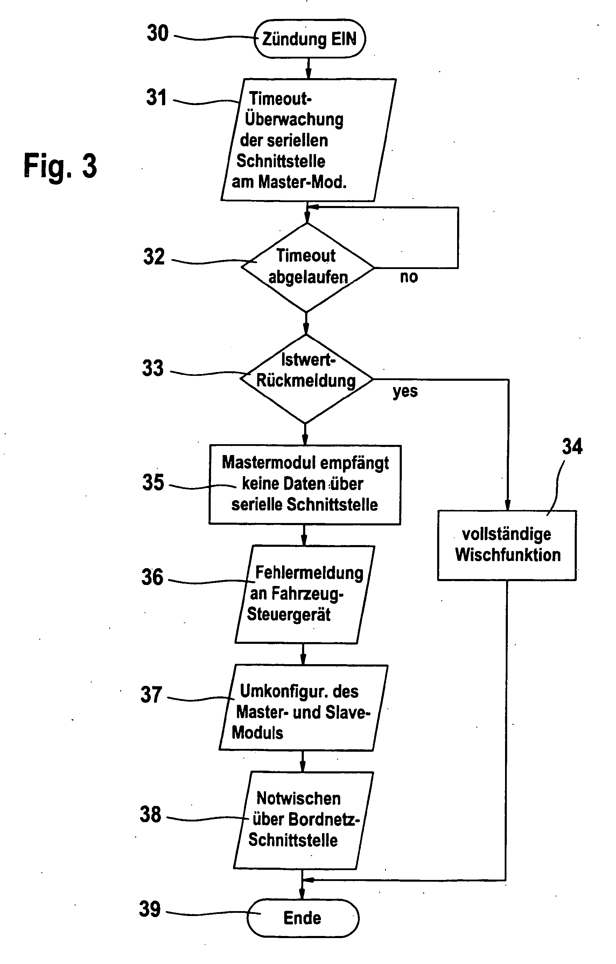

Um bei einem Ausfall der seriellen Schnittstelle 21 durch Unterbrechen oder dergleichen diese Störung möglichst rasch zum Aufruf eines Notlauf-Konzeptes zu erfassen, wird im Mastermodul 12 die Kommunikation auf der seriellen Schnittstelle 21 mit einer an sich bekannten Timeout-Überwachung fortlaufend überprüft. Beim Ansprechen der Timeout-Überwachung gibt sodann die Steuerung 16 des Mastermoduls 12 eine Fehlermeldung an das Fahrzeug-Steuergerät 20, um nunmehr die Wischermodule 12, 13 über die Bordnetz-Schnittstelle 19 auf einen Notbetrieb umzusteuern. Dieser Vorgang wird mit Hilfe der Figuren 2 und 3 im Folgenden näher erläutert.

In Figur 2 sind auf einer Zeitachse t verschiedene Signalverläufe in der Steuerung 16 des Mastermoduls 12 dargestellt und in Figur 3 ist in einem Flussdiagramm der Funktionsablauf für das Notlaufkonzept dargestellt. Mit dem Einschalten der Zündung im Programmschritt 30 erhält auch die Steuerung 16 des Mastermoduls 12 zum Zeitpunkt to gemäß Signalverlauf a) in Figur 2 das Signal Zündung EIN. Damit wird vom Mastermodul 12 gemäß Signalverlauf b) in zyklischer Folge ein Sollwert für das Slavemodul 13 auf die serielle Schnittstelle 21 gegeben. Das Slavemodul 13 beantwortet diese Sollwerte jeweils zeitlich versetzt gemäß Signalverlauf c) durch zyklische Istwerte. Mit dem Einschalten der Zündung wird außerdem gemäß Programmschritt 31 durch die Steuerung 16 des Mastermoduls 12 eine Timeout-Überwachung aktiviert, um den Eingang der Istwerte als Rückmeldedaten des Slavemoduls 13 über die serielle Schnittstelle 21 zu erfassen. Mit dem Signalverlauf d) ist in Figur 2 dargestellt, dass die Steuerung 16 des Mastermoduls 12 mit jedem der zyklisch auf die serielle Schnittstelle 21 abgegebenen Sollwert-Signalen die Timeout-Überwachung neu startet. Die Timeout-Überwachung hat dabei eine fest eingestellte Ablaufzeit Ta, zum Beispiel von 2ms, innerhalb der das Istwert-Rückmeldesignal im Mastermodul 12 eingegangen sein muss. Der Eingang der Istwert-Rückmeldung ist dabei jeweils um eine Zeit Tr gegenüber den zyklischen Sollwerten versetzt, wobei die Zeitversetzung Tr etwa der halben Zykluszeit Tz der Sollwerte, zum Beispiel von 3ms, entspricht. Das Slavemodul 13 gibt somit bei jedem Eingang eines Sollwertes innerhalb einer Zeitspanne, die kleiner als die vorgegebene Ablaufzeit Ta der Timeout-Überwachung ist, ein Istwert-Signal auf die serielle Schnittstelle 21. Mit dem Eingang der Istwert-Signale im Mastermodul 12 wird jeweils die Timeout-Überwachung.zurückgesetzt und mit dem nachfolgenden Sollwert-Signal erneut gestartet. Alternativ kann der Eingang des Istwert-Signals auch von einer Logik erfasst werden, um die Timeout-Überwachung erst beim Erreichen der Ablaufzeit Ta zurückzusetzen. Im Programmschritt 32 wird nun mit jedem Start der Timeout-Überwachung abgefragt, ob die Ablaufzeit Ta erreicht ist. Sobald dies der Fall ist, wird im Programmschritt 33 der Eingang eines Rückmeldesignals in Form eines Istwertes abgefragt. Dies ist der Fall, wenn innerhalb der Ablaufzeit Ta die Timeout-Überwachung durch den Eingang eines Istwert-Signals zurückgesetzt wurde. In diesem Fall wird gemäß dem Programmschritt 34 die vollständige Wischfunktion der Wischeranlage festgestellt.

Tritt nun gemäß Figur 2 zum Zeitpunkt tx auf der seriellen Schnittstelle 21 eine Unterbrechung auf, werden lediglich noch Sollwerte vom Mastermodul 12 an die serielle Schnittstelle 21 abgegeben. Eine Istwert-Rückmeldung findet nicht mehr statt, so dass gemäß Programmschritt 35 das Mastermodul 12 auch keine weiteren Istwert-Daten über die serielle Schnittstelle 21 empfängt. Gemäß dem Signalverlauf d) wird folglich die Timeout-Überwachung nicht mehr zurückgesetzt und mit dem Erreichen der Ablaufzeit Ta wird nunmehr zur Zeit ty im Mastermodul 12 gemäß dem Signalverlauf e) ein Fehler erkannt, der im Programmschritt 36 in Figur 3 als Fehlermeldung an das Fahrzeug-Steuergerät übermittelt wird. Damit wird im folgenden Programmschritt 37 im Fahrzeug-Steuergerät 20 ein Unterprogramm aufgerufen, mit dem die Steuerungen 16 des Mastermoduls 12 und des Slavemoduls 13 mittels neuer Kennungen unterschiedlich umkonfiguriert werden. Die Umkonfigurierung der Steuerung 16 des Mastermoduls 12 erfolgt derart, dass es die Sollwerte für das Slavemodul 13 nunmehr auf die Bordnetz-Schnittstelle 19 legt. Des weiteren wird die Steuerung 16a des Slavemoduls 13 derart umkonfiguriert, dass es die vom Mastermodul 12 über die Bordnetz-Schnittstelle 19 kommenden Sollwerte einliest. Mit der Umkonfigurierung werden ferner die Istwerte des Slavemoduls 13 auf die Bordnetz-Schnittstelle 19 gelegt und außerdem werden diese Istwerte nunmehr über die Bordnetz-Schnittstelle 19 von der Steuerung 16 des Mastermoduls 12 eingelesen. Im Programmschritt 38 wird schließlich über die Bordnetz-Schnittstelle 19 ein Notlauf der Wischeranlage gewährleistet. Im Schritt 39 wird dann das Programm beendet. Beide Scheibenwischer 10, 11 können dabei ihre vollständige Wischfunktion ausüben, da lediglich der Austausch der Soll- und Istwerte über die Bordnetz-Schnittstelle 19 mit einer geringeren Aktualisierungsrate erfolgt. Dies könnte allenfalls bei einem bereits vorhandenen hohen Datendurchsatz auf der Bordnetz-Schnittstelle 19 zu einer leicht ungleichmäßigen Bewegung des Scheibenwischers 11 auf der Beifahrerseite führen. Da auch im Notbetrieb das Mastermodul 12 die Position des Slavemoduls laufend steuert und überwacht, wird weiterhin bei uneingeschränkten Wischfeldern eine Kollision der Scheibenwischer 10, 11 vermieden.

Um sicher zu stellen, dass ein Ausfall der seriellen Schnittstelle 21 bereits vor der Inbetriebnahme der Wischeranlage erkannt wird, ist die Steuerung 16 des Mastermoduls 12 derart konfiguriert, dass das Mastermodul 12 bei abgeschalteter Wischeranlage die Parklage beziehungsweise eine erweiterte Parklage als Sollwert-Signal über die serielle Schnittstelle 21 an das Slavemodul 13 zyklisch abgibt. Durch das entsprechend zyklisch auftretende Rückmeldesignal vom Slavemodul 13 kann somit die serielle Schnittstelle 21 auch im Ruhezustand der Wischeranlage überwacht werden.

Die Erfindung ist nicht auf das zuvor beschriebene Ausführungsbeispiel beschränkt. So kann ergänzend beim Ansprechen der Timeout-Überwachung das Fahrzeug-Steuergerät 20 auch eine Anzeige der Fehlermeldung auslösen, die den Fahrer zum Aufsuchen einer Fachwerkstatt auffordert. Außerdem lässt sich das Notlaufkonzept auch für Wischeranlagen von Omnibussen und Nutzkraftfahrzeugen mit 3 Wischermodulen verwenden. Hierbei wird zweckmäßigerweise das dritte Wischermodul als Slavemodul zu dem vorhandenen Slavemodul parallel geschaltet. Ferner ist es für eine rasche Erfassung einer Störung auf der seriellen Schnittstelle möglich, auch am Slave-Modul den zyklischen Eingang der Sollwert-Signale mit einem Timeout zu überwachen und im Falle einer Störung auch vom Slave-Modul eine Fehlermeldung an das Fahrzeugsteuergerät abzugeben. Schließlich lässt sich diese Lösung noch derart erweitern, dass eine Umkonfigurierung der Wischermodule vom Fahrzeug-Steuergerät erst dann erfolgt, wenn beide Wischermodule eine Fehlermeldung an das Fahrzeugsteuergerät abgeben. Will man das Ausbleiben vereinzelter Istwert-Rückmeldungen tolerieren, wird man die Ablaufzeit der Timeout-Überwachung z.b. auf 6 ms verlängern. Die Timeout-Überwachung wird auch dann zyklisch durch die Istwert-Signale zurückgesetzt.

## Patentansprüche

1. Wischanlage für Fahrzeug-Windschutzscheiben mit mindestens zwei Scheibenwischern (10, 11), die von jeweils einem Wischermodul (12, 13), bestehend aus Reversiermotor (14), Getriebe (15) und elektronischer Steuerung (16) angetrieben werden, wobei das fahrerseitige Wischermodul (12) als Mastermodul über eine Bordnetz-Schnittstelle (19) an ein Fahrzeug-Steuergerät (20) angeschlossen ist und dass mindestens eine beifahrerseitige Wischermodul (13) als Slavemodul über eine serielle Schnittstelle (21) vom Mastermodul anzusteuern ist sowie durch einen zyklischen Datenaustausch der Soll- und Istwerte über die serielle Schnittstelle (21) mit dem Mastermodul kommuniziert, **dadurch gekennzeichnet, dass** die Steuerungen (19) aller Wischermodule (12, 13) an die Bordnetz-Schnittstelle (19) angeschlossen sind, dass die Steuerung (16) des Mastermoduls (12) mit einer Timeout-Überwachung (d) den Eingang der Istwert-Rückmeldedaten (c) des mindestens einen Slavemoduls (13) auf der seriellen Schnittstelle (21) erfasst, dass beim Ansprechen der Timeout-Überwachung (d) die Steuerung (16) des Mastermoduls (12) eine Fehlermeldung (e) an das Fahrzeug-Steuergerät (20) abgibt und dass das Fahrzeug-Steuergerät (20) so dann zumindest das Slavemodul (13) über die Bordnetz-Schnittstelle (19) auf einen Notbetrieb umsteuert.

2. Wischeranlage nach Anspruch 1, **dadurch gekennzeichnet, dass** alle Wischermodule (12, 13) mit einer vom Fahrzeug-Steuergerät (20) umkonfigurierbaren Steuerung (19, 19a) über die Bordnetz-Schnittstelle (21) am Fahrzeug-Steuergerät (20) angeschlossen sind.

3. Wischeranlage nach Anspruch 2, **dadurch gekennzeichnet, dass** beim Ansprechen der Timeout-Überwachung (d) das Fahrzeug-Steuergerät (20) die Steuerung (16, 16a) des Mastermoduls (12) und des Slavemoduls (13) unterschiedlich umkonfiguriert.

4. Wischeranlage nach Anspruch 3, **dadurch gekennzeichnet, dass** durch die Umkonfigurierung die Steuerung (16) des Mastermoduls (12) die Sollwerte (b) für das Slavemodul (13) auf die Bordnetz-Schnittstelle (19) legt und die Steuerung (16a) des Slavemoduls (13) die vom Mastermodul (12) über die Bordnetz-Schnittstelle (19) kommenden Sollwerte (b) einliest.

5. Wischeranlage nach Anspruch 4, **dadurch gekennzeichnet, dass** durch die Umkonfigurierung die Steuerung (16a) des Slavemoduls (13) dessen Istwerte (c) auf die Bordnetz-Schnittstelle (19) legt und dass die Steuerung (16) des Mastermoduls (12) die Istwerte über die Bordnetz-Schnittstelle (19) einliest.

6. Wischeranlage nach einem der vorherigen Ansprüche, **dadurch gekennzeichnet, dass** die Steuerung (16) des Mastermoduls (12) die Timeout-Überwachung (d) mit dem Einschalten der Bordnetz-Stromversorgung (a) parallel zum Datenaustausch auf der seriellen Schnittstelle (21) aktiviert.

7. Wischeranlage nach Anspruch 6, **dadurch gekennzeichnet, dass** die Steuerung (16) des Mastermoduls (12) mit jedem der zyklisch auf die serielle Schnittstelle (21) abgegebenen Sollwert-Signale (b) die Timeout-Überwachung (d) neu startet.

8. Wischeranlage nach Anspruch 7, **dadurch gekennzeichnet, dass** die Steuerung (19a) des Slavemoduls (13) mit jedem Eingang eines Sollwert-Signals (b) innerhalb einer Zeitspanne (Tr), welche kleiner als eine vorgegebene Ablaufzeit (Ta) der Timeout-Überwachung (d) ist, ein Istwert-Signal (c) auf die serielle Schnittstelle (21) gibt, welches die Timeout-Überwachung jeweils zurücksetzt.

9. Wischeranlage nach Anspruch 7 oder 8, **dadurch gekennzeichnet, dass** das Mastermodul (12) bei abgeschalteter Wischeranlage die Parklage, insbesondere eine erweiterte Parklage als Sollwert-Signal (b) zyklisch über die serielle Schnittstelle (21) an das Slavemodul (13) abgibt.

10. Wischeranlage nach einem der vorherigen Ansprüche, **dadurch gekennzeichnet, dass** beim Ansprechen (ty) der Timeout-Überwachung (d) das Fahrzeug-Steuergerät (20) eine Anzeige der Fehlermeldung (e) auslöst.

## Claims

1. Wiping system for vehicle windscreens, having at least two windscreen wipers (10, 11) which are each driven by a wiper module (12, 13) comprising a reversing motor (14), gear mechanism (15) and electronic control system (16), where the driver-side wiper module (12) as a master module is connected to a vehicle controller (20) via an on-board vehicle electrical system interface (19) and the at least one passenger-side wiper module (13) as a slave module can be actuated by the master module via a serial interface (21) and communicates with the master module by cyclic data interchange of the setpoint and actual values via the serial interface (21), **characterized in that** the control systems (16) of all wiper modules (12, 13) are connected to the on-board vehicle electrical system interface (19), **in that** the control system (16) of the master module (12) detects the input of the actual value feedback data (c) from the at least one slave module (13) on the serial interface (21) with timeout monitoring (d), **in that** the control system (16) of the master module (12) outputs an error message (e) to the vehicle controller (20) when timeout monitoring (d) responds, and **in that** the vehicle controller (20) then changes over at least the slave module (13) to an emergency mode via the on-board vehicle electrical system interface (19).

2. Wiper system according to Claim 1, **characterized in that** all wiper modules (12, 13) with a control system (16, 16a) which can be reconfigured by the vehicle controller (20) are connected to the vehicle controller (20) via the on-board vehicle electrical system interface (21).

3. Wiper system according to Claim 2, **characterized in that**, when timeout monitoring (d) responds, the vehicle controller (20) reconfigures the control system (16, 16a) of the master module (12) and the slave module (13).

4. Wiper system according to Claim 3, **characterized in that**, as a result of the reconfiguration, the control system (16) of the master module (12) applies the setpoint values (b) for the slave module (13) to the on-board vehicle electrical system interface (19), and the control system (16a) of the slave module (13) reads in the setpoint values (b) arriving from the master module (12) via the on-board electrical system interface (19).

5. Wiper system according to Claim 4, **characterized in that**, as a result of the reconfiguration, the control system (16a) of the slave module (13) applies its actual values (c) to the on-board vehicle electrical system interface (19), and **in that** the control system (16) of the master module (12) reads in the actual values via the on-board vehicle electrical system interface (19).

6. Wiper system according to one of the preceding claims, **characterized in that** the control system (16) of the master module (12) activates timeout monitoring (d) by switching on the on-board vehicle electrical system power supply (a) in parallel with data interchange on the serial interface (21).

7. Wiper system according to Claim 6, **characterized in that** the control system (16) of the master module (12) restarts timeout monitoring (d) with each of the setpoint value signals (b) which are cyclically output to the serial interface (21).

8. Wiper system according to Claim 7, **characterized in that** the control system (16a) of the slave module (13) passes an actual value signal (c), which in each case resets timeout monitoring, to the serial interface (21) each time a setpoint value signal (b) is input within a time period (Tr) which is shorter than a prespecified execution time (Ta) for timeout monitoring (d).

9. Wiper system according to Claim 7 or 8, **characterized in that**, when the wiper system is switched off, the master module (12) cyclically outputs the park position, in particular an extended park position, as setpoint value signal (b) to the slave module (13) via the serial interface (21).

10. Wiper system according to one of the preceding claims, **characterized in that**, when timeout monitoring (d) responds (ty), the vehicle controller (20) triggers a display of the error message (e).

## Revendications

1. Installation d'essuie-glace de pare-brise de véhicule comportant au moins deux essuie-glace (10, 11) entraînés chacun par un module d'essuie-glace (12, 13) composé d'un moteur réversible (14), d'une transmission (15) et d'une commande électronique (16),
le module d'essuie-glace (12) côté conducteur fonctionnant comme module-maître par une interface de réseau embarqué (19), reliée à l'appareil de commande (20) du moteur et au moins un module d'essuie-glace (13) côté passager est commandé par module-esclave par l'interface-série (21) à partir du module-maître et par un échange cyclique de données des valeurs réelles et des valeurs de consigne ou par l'interface-série (21) on communique avec le module-maître,
**caractérisée en ce que**
les commandes (19) de tous les modules d'essuie-glace (12, 13) sont reliées à l'interface de réseau embarqué (19),
la commande (16) du module-maître (12) saisit par une surveillance de décompte de temps (d), l'entrée des données de retour de valeur réelle (c) d'au moins un module-esclave (13) sur une interface-série (21),
en cas de mise en oeuvre de la surveillance de décompte de temps (d), la commande (16) du module-maître (12) fournit un message de défaut (e) à l'appareil de commande (20) et
l'appareil de commande (20) transforme la commande au moins du module-esclave (13) par l'interface (19) du réseau embarqué pour passer en mode de fonctionnement de secours.

2. Installation d'essuie-glace selon la revendication 1,
**caractérisée en ce que**
tous les modules d'essuie-glace (12, 13) sont raccordés à une commande (19, 19a) qui peut être reconfigurée par l'appareil de commande (20) du véhicule, sont raccordés à l'appareil de commande (20) du véhicule par l'interface (21) du réseau embarqué.

3. Installation d'essuie-glace selon la revendication 2,
**caractérisée en ce qu'**
en cas de mise en oeuvre de la surveillance de décompte de temps (d), l'appareil de commande (20) du véhicule reconfigure la commande (16, 16a) du module-maître (12) et du module-esclave (13) de manière différente.

4. Installation d'essuie-glace selon la revendication 3,
**caractérisée en ce que**
par la reconfiguration, la commande (16) du module-maître (12) applique la valeur de consigne (b) du module-esclave (13) à l'interface (19) du réseau embarqué et la commande (16a) du module-esclave (13) introduit les valeurs de consigne (b) venant du module-maître (12) par l'interface (19) du réseau embarqué.

5. Installation d'essuie-glace selon la revendication 4,
**caractérisée en ce que**
par la reconfiguration, la commande (16a) applique la valeur réelle (c) du module-esclave (13) à l'interface du réseau embarqué (19) et la commande (16) du module-maître (12) introduit la valeur réelle par l'interface (19) du réseau embarqué.

6. Installation d'essuie-glace selon l'une des revendications précédentes,
**caractérisée en ce que**
la commande (16) du module-maître (12) active la surveillance de décompte de temps (d) par le branchement de l'alimentation du réseau embarqué (a) en parallèle à l'échange de données sur l'interface-série (21).

7. Installation d'essuie-glace selon la revendication 6,
**caractérisée en ce que**
la commande (16) du module-maître (12) redémarre la surveillance de décompte de temps (d) avec chacun des signaux de valeur réelle (b) fournis cycliquement à l'interface-série (21).

8. Installation d'essuie-glace selon la revendication 7,
**caractérisée en ce qu'**
à chaque arrivée d'un signal de valeur de consigne (b) dans une période (Tr) inférieure à une durée prédéterminée (Ta) de la surveillance de décompte de temps (d), la commande (19a) du module-esclave (13) fournit un signal de valeur réelle (c) à l'interface-série (21) qui remet à zéro la surveillance de décompte de temps.

9. Installation d'essuie-glace selon la revendication 7 ou 8,
**caractérisée en ce que**
lorsque l'installation d'essuie-glace est coupée, le module-maître (12) fournit la position de rangement, notamment une position de rangement étendue comme signal de valeur de consigne (b) cycliquement par l'interface-série (21) au module-esclave (13).

10. Installation d'essuie-glace selon l'une des revendications précédentes,
**caractérisée en ce que**
lors de la mise en oeuvre (ty) de la surveillance de décompte de temps (d), l'appareil de commande (20) du véhicule déclenche l'affichage du message de défaut.
